Europäisches Patentamt

**European Patent Office**

**Office européen des brevets**

(19)

(11) Veröffentlichungsnummer: **0 317 650**
A1

(12) **EUROPÄISCHE PATENTANMELDUNG**
Veröffentlicht nach Art. 158 Abs. 3 EPÜ

(21) Anmeldenummer: **88906223.8**

(22) Anmeldetag: **28.04.88**

Daten der zugrundeliegenden internationalen Anmeldung:

(86) Internationale Anmeldenummer:
**PCT/SU88/00106**

(87) Internationale Veröffentlichungsnummer:
**WO88/10021 (15.12.88 88/27)**

(51) Int.Cl.³: **H 02 K 1/22**

(30) Priorität: **05.06.87 SU 4257349**

(43) Veröffentlichungstag der Anmeldung:
**31.05.89 Patentblatt 89/22**

(84) Benannte Vertragsstaaten:
**AT DE FR GB IT**

(71) Anmelder: **POPOV, Nikolai Pavlovich**
**pr. Ispytatelei, 31-1-507**
**Leningrad, 197349(SU)**

(71) Anmelder: **KLOTSVOG, Grigory Naumovich**
**ul. Gavanskaya 11-43**
**Leningrad, 199106(SU)**

(71) Anmelder: **PLOTNIKOV, Andrei Dmitrievich**
**pr. Nastavnikov, 25-3-101**
**Leningrad, 195298(SU)**

(71) Anmelder: **TRETYAKOV, Evgeny Andreevich**
**ul. Yablochkova, 3-31**
**Leningrad, 197198(SU)**

(71) Anmelder: **TALYSHINSKY, Israfil Teimurovich**
**ul. Serdobolskaya, 11-65**
**Leningrad, 197343(SU)**

(72) Erfinder: **POPOV, Nikolai Pavlovich**
**pr. Ispytatelei, 31-1-507**
**Leningrad, 197349(SU)**

(72) Erfinder: **KLOTSVOG, Grigory Naumovich**
**ul. Gavanskaya 11-43**
**Leningrad, 199106(SU)**

(72) Erfinder: **PLOTNIKOV, Andrei Dmitrievich**
**pr. Nastavnikov, 25-3-101**
**Leningrad, 195298(SU)**

(72) Erfinder: **TALYSHINSKY, Israfil Teimurovich**
**ul. Serdobolskaya, 11-65**
**Leningrad, 197343(SU)**

(72) Erfinder: **TRETYAKOV, Evgeny Andreevich**
**ul. Yablochkova, 3-31**
**Leningrad, 197198(SU)**

(74) Vertreter: **Ebbinghaus, Dieter et al,**
**Patentanwälte v. Füner, Ebbinghaus, Finck Mariahilfplatz**
**2 & 3**
**D-8000 München 90(DE)**

(54) **ASYNCHRONMOTOR.**

(57) Der Asynchronmotor enthält einen Ständer 1, einen Läufer 2, der einen Kern und einen aus mehreren Schichten aufgebauten Schirm 3 umfaßt. Jede Schicht 4 des Schirms 3 ist aus einer eisenhaltigen Legierung mit hoher elektrischer Leitfähigkeit ausgeführt, wobei die elektrische Leitfähigkeit in jeder der nachfolgenden Schichten in Richtung zur Läuferachse mit verkleinertem Wert gewählt ist.

FIG.1

EP 0 317 650 A1

I

# ELEKTRISCHER ASYNCHRONMOTOR

## Gebiet der Technik

Die Erfindung bezieht sich auf die Elektrotechnik und insbesondere auf elektrische Asynchronmotoren mit ferromagnetischem Massivläufer. Am erfolgreichsten kann die Erfindung in elektrischen Antrieben verwendet werden, die zur Steuerung von Rohrleitungsarmaturen bzw. anderen Einrichtungen bestimmt sind, wo ein hohes Anlaufmoment des Motors und minimale dynamische Überbeanspruchungen im Stellmechanismus beim Bremsen des Motors zu gewährleisten sind.

## Vorhergehender Stand der Technik

Asynchronmotoren haben infolge der Einfachheit der Konstruktion und der Zuverlässigkeit im Betrieb eine weite Verbreitung gefunden. Der wesentliche Nachteil der Asynchronmotoren besteht aber entweder im niedrigen Anlaufmoment oder in der hohen Nenndrehzahl des Läufers. Sowohl das eine als auch das andere bedingt gewisse negative Folgen für den Stellmechanismus, zu dessen Steuerung der Asynchronmotor bestimmt ist. Ein niedriges Anlaufmoment des Motors gewährleistet nicht das zuverlässige Abheben des Absperrorgans vom Sitz der Armatur, die hohe Nenndrehzahl des Läufers führt zu großen dynamischen Überbeanspruchungen, die im Stellmechanismus infolge des scharfen Bremsens des Motors in Erscheinung treten. Aus diesem Grunde geht auch die Vervollkommnung der Asynchronmotoren, die zur Steuerung von Rohrleitungsarmaturen bestimmt sind, in Richtung der Erhöhung des Anlaufmoments und der Reduzierung der Nenndrehzahl des Läufers.

Es sind Asynchronmotoren mit einem Ständer und einem in Form eines massiven ferromagnetischen Zylinders ausgeführten Läufers bekannt (Elektrichestvo, Nr. 2, 1926 (Moskau), K. I. Shenfer "Rotor asinkhronnogo dvigatelya v vide massivnogo zheleznogo tsilindra, S. 85 bis 90).

Diese Motoren haben infolge des durch die niedrige elektrische Leitfähigkeit des Läuferwerkstoffs bedingten hohen Werts des Anlaßwiderstandes des Läufers ein kleines Anlaufmoment. Aus diesem Grunde führt die Verwendung solcher Motore in Antrieben für die Steuerung von Ausrüstungen, die ein hohes Anlaufmoment benötigen, darunter auch zur Steuerung von Absperrarmaturen in Rohrleitungen, zu einer Verschlechterung der Kennwerte der Antriebseinrichtungen hinsichtlich ihrer Masse und Abmessungen.

Bekannt ist weiterhin ein Asynchronmotor mit einem Ständer und einem Läufer, der einen Kern und einen auf ihn starr aufgesetzten Schirm umfaßt, der aus einer eisenhaltigen Legierung mit hoher elektrischer Leitfähigkeit ausgeführt ist ("Elektrotekhnika" Nr. 3, 1970, (Moskau), V. S. Mogilnikov, A. N. Strelnikov "Perspektivy uluchshenia kharakteristik asinkhronnykh dvigatelei s massivnymi rotorami").

Das Vorhandensein eines Schirms im angeführten Motor, der aus einer eisenhaltigen Legierung mit hoher elektrischer Leitfähigkeit ausgeführt ist, erhöht das Anlaufmoment des Motors. Die Erhöhung des Anlaufmoments des Motors wird aber von einer Erhöhung der Nenndrehzahl des Läufers begleitet, das heißt der Drehzahl bei stationärem Betrieb des Motors. Da das Schließen der Absperrarmaturen von einem scharfen Bremsen des Motors begleitet wird, dessen Läufer mit einer hohen Drehzahl rotiert, kommen in den Absperrarmaturen große dynamische Überbeanspruchungen zustande, welche die Zuverlässigkeit der Funktion der Armaturen herabsetzen.

Offenbarung der Erfindung

Der Erfindung liegt die Aufgabe zugrunde, einen Asynchronmotor mit einen Läufer zu schaffen, dessen Schirm derart ausgeführt ist, daß bei Aufrechterhaltung eines ausreichend hohen Drehmoments des Motors die Nenndrehzahl des Läufers verringert und hierdurch die dynamischen Überbeanspruchungen im Stellmechanismus beim Abbremsen des Motors reduziert werden, wodurch die Betriebszuverlässigkeit der Armatur erhöht wird.

Diese Aufgabe wird ausgehend von einem Asynchronmotor mit einem Ständer und einem Läufer, der einen Kern und einen starr auf ihm angeordneten Schirm umfaßt, der aus einer eisenhaltigen Legierung mit hoher elektrischer Leitfähigkeit ausgeführt ist, erfindungsgemäß dadurch gelöst, daß der Schirm mehrschichtig ausgeführt ist, wobei jede nachfolgende Schicht in Richtung zur Läuferachse mit verkleinerter elektrischer Leitfähigkeit ausgeführt ist.

Die mehrschichtige Ausführung des Läuferschirms mit in Richtung der Läuferachse abnehmender elektrischer Leitfähigkeit jeder Schicht erhöht den Wirkwiderstand des Läufers gegenüber einem aus einer Schicht aufgebauten Schirm gleicher Dicke. Es ist bekannt, daß das Nennmoment am Läufer dem Strom im Läufer proportional und dieser Strom dem Widerstand und der Drehzahl umgekehrt proportional ist. Bei erhöhtem Wirkwiderstand des Läufers bedingt die Aufrechterhaltung des erforderlichen Nennmoments am Läufer die Herabsetzung der Läuferdrehzahl. Die Herabsetzung der Läuferdrehzahl gewährleistet beim scharfen Abbremsen des Motors während des Schließens der Absperrarmatur eine Verminderung der dynamischen Überbeanspruchungen in ihr, was die Betriebszuverlässigkeit der Armatur erhöht.

Kurze Beschreibung der Zeichnungen

Die Erfindung wird anhand des in der Zeichnung gezeigten Ausführungsbeispiels erläutert. Es zeigen

Fig. 1 einen erfindungsgemäßen Asynchronmotor im Schnitt und

Fig. 2 die mechanischen Kennlinien von Asynchronmotoren mit einem Läufer ohne Schirm, mit einem Läufer, der mit einem Einschichtschirm ausgerüstet ist, und mit einem Läufer, der mit ei-Mehrschichtschirm ausgerüstet ist.

Beste Ausführungsvariante der Erfindung

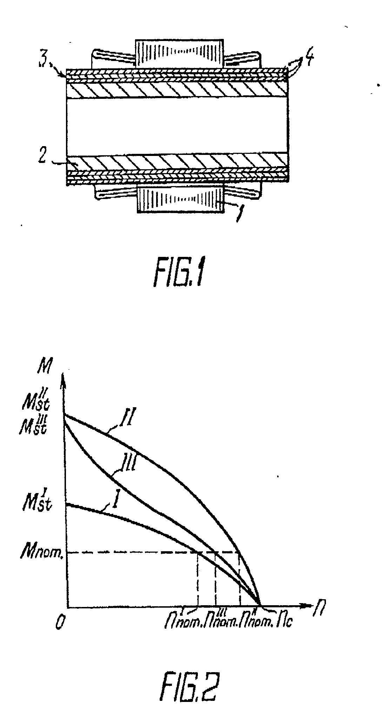

Der Asynchronmotor enthält einen Ständer 1 (Fig. 1), in dessen Innerem der Läufer gelagert ist, der einen ferromagnetischen Kern 2 und einen starr auf ihm angeordneten Schirm 3 umfaßt, der entsprechend der Form des Kerns ausgeführt ist. Der Schirm 3 ist mehrschichtig ausgeführt. Jede Schicht 4 des Schirms 3 ist aus einer eisenhaltigen Legierung mit hoher elektrischer Leitfähigkeit ausgeführt, was durch Elemente mit hoher Leitfähigkeit, bespielsweise Kupfer in den Legierungen, aus welchen die Schichten des Schirms hergestellt sind, erzielt wird. Hierbei wird der Wert der elektrischen Leitfähigkeit jeder nachfolgenden Schicht des Schirms in Richtung zur Läuferachse verkleinert gewählt.

Die Berechnung der gesuchten mechanischen Kennlinie des erfindungsgemäßen Motors wird beim Vorliegen der vorgegebenen mechanischen Quellkennlinie ausgeführt, die durch die Kennwerte des Stellmechanismus bestimmt wird. Die Berechnung beginnt mit der Wahl der Zahl der Schirmschichten und des Werts der elektrischen Leitfähigkeit jeder Schicht. Auf Grund der ausgeführten Berechnungen wird die rechnerische mechanische Kennlinie ermittelt. Falls die erzielte Kennlinie der vorgegebenen Kennlinie nicht genügt, wird sowohl die Zahl der Schirmschichten als auch der Wert der elektrischen Leitfähigkeit jeder Schicht verändert, bis im Ergebnis der Berechnung eine rechnerische Quellkennlinie erzielt wird, die der vorgegebenen Kennlinie möglichst nahe kommt.

In Fig. 2 sind mechanische Vergleichskennlinien angeführt, welche die Abhängigkeit des Moments M des Läufers von der Drehzahl n des Läufers darstellen. Die Kurve I stellt die angeführte Abhängigkeit für einen Asynchronmotor mit einem Läufer ohne Schirm dar, die Kurve II für einen Asynchronmotor mit einem Läufer, der mit einem Einschichtschirm ausgerüstet ist, und die Kurve III für einen Motor mit einem Läufer, der mit einem Mehrschichtschirm ausgerüstet ist. Aus der Gegenüberstellung der angeführten Kurven ist ersichtlich, daß sich die mechanische Kennlinie III des erfindungsgemäßen Motors im Bereich der geringen Drehzahlen, d. h. beim Anlaufen des Motors, der mechanischen Kennlinie II des Motors nähert, der mit einem Einschichtschirm ausgerüstet ist. Dadurch werden gute Anlaufeigenschaften des Motors erzielt, d. h. ein hohes Anlaufmoment $M_{anl.}$.

Im Bereich der Nenndrehzahl $n_n$ des Läufers nähert sich die mechanische Kennlinie III des erfindungsgemäßen Motors der mechanischen Kennlinie I des Motors mit einem Läufer ohne Schirm. Hierbei ist die Nenngeschwindigkeit $n_n^{III}$ des erfindungsgemäßen Motors wesentlich reduziert, was eine Herabsetzung der dynamischen Überbeanspruchungen im Stellmechanismus beim scharfen Abbremsen des Motors bedingt.

Beim Anlassen des Motors dringt die elektromagnetische Welle dank dem scharf ausgeprägten Skin-Effekt nur um einen verhältnismäßig kleinen Betrag (2 - 3 mm) in den Läuferkörper ein, beispielsweise in die erste äußere Schicht. Hierbei ist der Läuferwiderstand gleich $r_{anl.}$. Mit ansteigender Drehzahl des Läufers nimmt die Stromfrequenz im Läufer ab, was zu einer Vergrößerung der Eindringtiefe der elektromagnetischen Welle in den Läuferkörper führt. Bei einer gewissen Drehgeschwindigkeit n des Läufers wächst die Eindringtiefe der elektromagnetischen Welle beispielsweise um das Zweifache. In diesem Falle nimmt beim Fehlen eines Schirms am Läufer bzw. beim Vorhandensein eines Einschichtschirms, der einen konstanten Wert der elektrischen Leitfähigkeit über die gesamte Schirmdicke aufweist, der Wirkwiderstand des Läufers bis zum Wert von r ab, der gleich $r_{anl.}/2$ ist. Beim Vorhandensein eines Mehrschichtschirms mit in Richtung der Läuferachse abnehmender elektrischer Leitfähigkeit der Schichten auf dem Läufer bleibt der elektrische Wirkwiderstand des Läufers etwa gleich $r_{anl.}$. Bei weiterem Anstieg der Läuferdrehzahl bis zum Nennwert nimmt die Stromfrequenz im Läufer weiter ab, die Eindringtiefe der elektromagnetischen Welle wird größer, aber der elektrische Wirkwiderstand des Läufers bleibt ungefähr gleich $r_{anl.}$, weil die elektrische Leitfähigkeit jeder nachfolgenden Schirmschicht in Richtung zur Läuferachse abnimmt.

Somit bedingt der erhöhte elektrische Wirkwiderstand des Läufers unter Beibehaltung des erforderlichen Nennmoments $M_n$ am Läufer eine Verminderung der Läuferdrehzahl. Die Verminderung der Läuferdrehzahl gewährleistet beim scharfen Abbremsen des Motors während des Schließens der Absperrarmatur eine Herabsetzung der dynamischen Überbeanspruchungen in dieser Armatur, was die Betriebszuverlässigkeit der Armatur erhöht.

## Industrielle Anwendbarkeit

Am erfolgreichsten kann die Erfindung in elektrischen Antrieben verwendet werden, die zur Steuerung von Rohrleitungsarmaturen bzw. anderen Einrichtungen bestimmt sind, wo ein hohes Anlaufmoment des Motors und minimale dynamische Überbeanspruchungen beim Abbremsen des Motors zu gewährleisten sind.

PATENTANSPRUCH

Asynchronmotor mit einem Ständer (1) und einem Läufer (2), der einen Kern und einen starr auf ihm angeordneten Schirm (3) aus einer eisenhaltigen Legierung mit hoher elektrischer Leitfähigkeit umfaßt, dadurch g e k e n n z e i c h n e t, daß der Schirm (3) mehrschichtig ausgeführt ist, wobei jede nachfolgende Schicht (4) in Richtung zur Läuferachse eine geringere elektrische Leitfähigkeit aufweist.

EPAB-37432.3

FIG.1

FIG.2

# INTERNATIONAL SEARCH REPORT

International Application No PCT/SU 88/00106

**I. CLASSIFICATION OF SUBJECT MATTER** (if several classification symbols apply, indicate all) [6]

According to International Patent Classification (IPC) or to both National Classification and IPC

IPC[4]    H 02 K 1/22

**II. FIELDS SEARCHED**

| Minimum Documentation Searched [7] | |
|---|---|
| Classification System | Classification Symbols |
| IPC[4] | HO2K 1/06, 1/22, 17/16 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | GB, A, 2035715, (B.G. Waurick & Associates (Proprietary) Limited), 18 June 1980 (18.06.80) -- | 1 |
| A,P | SU, A1, 1334273, (Tashkentsky institut inzhenerov zheleznodorozhnogo transporta) 30 August 1987 (30.08.87) -- | 1 |
| A | Ju.A. Kulik "Elektricheskie mashiny", 1966, Vysshaya shkola, (Moscow), see page 243 | 1 |

---

\* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 8 August 1988 (08.08.88) | 01 September 1988 (01.09.88) |

| International Searching Authority | Signature of Authorized Officer |
|---|---|
| ISA/SU | |